# EUROPÄISCHE PATENTSCHRIFT

(11) **EP 0 904 981 B1**
(45) Veröffentlichungstag und Bekanntmachung des Hinweises auf die Patenterteilung: **12.12.2007**
(21) Anmeldenummer: 98114238.3
(22) Anmeldetag: 28.07.1998
(51) Int. Cl.: B60Q 1/076

(54) **Verfahren und Schaltungsanordnung zur Leuchtweitenregulierung eines Scheinwerfers**
Method and device for controlling the lighting distance of a headlamp
Procédé et dispositif pour régler la distance d'éclairage d'un phare

(30) Priorität: 30.09.1997 DE 19743260
(43) Veröffentlichungstag der Anmeldung: 31.03.1999
(73) Patentinhaber: Infineon Technologies AG, 81669 München (DE)
(72) Erfinder: Lenz, Michael, 85604 Zorneding (DE); Horchler, Wolfgang, 83026 Rosenheim (DE); Auer, Frank, 85244 Röhrmoos (DE)
(74) Vertreter: Schmuckermaier, Bernhard

(56) Entgegenhaltungen:
- EP-A- 0 355 539
- EP-A- 0 470 408
- FR-A- 2 190 265

## Beschreibung

Die Erfindung betrifft ein Verfahren zur Leuchtweitenregulierung eines Scheinwerfers gemäß dem Oberbegriff des Anspruchs 1 sowie eine Schaltungsanordnung gemäß dem Oberbegriff des Anspruchs 7.

Bei den heute hergestellten Kraftfahrzeugen ist regelmäßig die Leuchtweitenregulierung der Scheinwerfer vorgesehen. Eine Leuchtweitenregulierung ist deshalb notwendig, damit die Scheinwerfer je nach Beladungszustand des Kfz so eingestellt sind, daß ein Gegenverkehr nicht geblendet wird. In Kraftfahrzeugen sind hierfür entweder stufenlose Leuchtweitensteller oder schaltbare Leuchtweitensteller üblich.

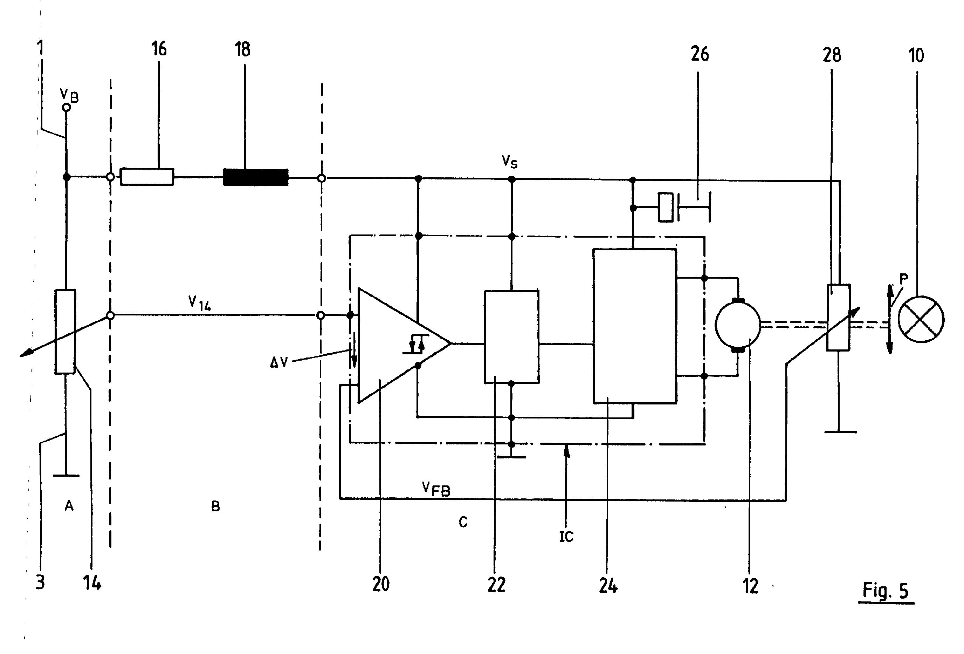

Eine bekannte Schaltungsanordnung für eine Leuchtweitenregulierung eines Kfz-Scheinwerfers zeigt Figur 5. Die Schaltung ist folgendermaßen aufgebaut.

Zwischen eine Versorgungsspannungsklemme 1, an der die Betriebsspannung V_{B} und damit also die Batteriespannung eines Kfz anliegt, und eine Bezugspotentialklemme 3 ist ein Sollwertgeber 14 in Form eines Geber-Potentiometers geschaltet. Dieser Sollwertgeber 14 befindet sich im Bereich des Armaturenbretts A des Kfzs. Über geeignete Zuleitungen B ist der Mittenabgriff des Sollwertgebers 14 und die Versorgungsspannungsklemme 1 mit einem an den Scheinwerfer 10 mechanisch gekoppelten Leuchtweitensteller C verbunden. Die Zuleitungen B sind der Einfachheit halber durch die Serienschaltung eines Widerstandes 16 mit nachgeschalteter Spule 18 ersatzschaltbildlich dargestellt. Der Leuchtweitensteller C weist einen Antriebsmotor 12 zum Höhen- und/oder Neigungsverstellen des Scheinwerfers 10 auf. Die Verstellung ist durch den Pfeil P schematisch angedeutet. Mit dem Scheinwerfer 10 ist ein Istwertgeber 28, hier ein sogenanntes Feedback-Potentiometer, gekoppelt, zwischen dessen Mittenabgriff und Bezugspotentialklemme 3 ein für die augenblickliche Stellung des Scheinwerfers 10 repräsentatives Signal V_{FB} greifbar ist. Der Leuchtweitensteller C verfügt über eine Steuereinrichtung IC mit einer eingangsseitigen Vergleichsstufe 20 und einer ausgangsseitigen Treiberstufe 24, an die der Antriebsmotor 12 geschaltet ist. Zwischen der Vergleichsstufe 20, die regelmäßig hysteresebehaftet ist, und der Treiberstufe 24 ist eine Logikeinheit 22 geschaltet. Zur Spannungsversorgung der Vergleichsstufe 20, der Logikeinheit 22 und der Treiberstufe 24 sind diese mit Zuleitungen an die über die Serienschaltung des Widerstandes 16 und der Spule 18 bereitgestellte Speisespannung V_{S} und an Bezugspotential angeschlossen. Zwischen der Bezugspotentialklemme 3 und der Leitung für die Speisespannung V_{S} ist ein Elektrolytkondensator, der noch näher erläutert wird, angeschlossen. Die Vergleichsstufe 20 ist mit ihrer einen Eingangsklemme an den Mittenabgriff des Sollwertgebers 14 angeschlossen und erhält von dort ein Sollsignal V₁₄. An der andere Eingangsklemme erhält die Vergleichsstufe 20 das Istsignal V_{FB} und bildet an ihrem Ausgang hysteresebehaftet eine Differenzspannung ΔV.

Die Funktionsweise ist folgendermaßen

Der Sollwertgeber am Armaturenbrett A ermöglicht dem Fahrer des Kfz die individuelle Justage der Scheinwerferstellung. Aufgrund der notwendigen mechanischen Kopplung des Motors 12 und des Istwertgebers 28 mit dem Scheinwerfer 10 ist der Leuchtweitensteller C direkt am Scheinwerfer 10 untergebracht. Der Antriebsmotor 12 wird von der Treiberstufe 24, die vorzugsweise eine Vollbrückenschaltung ist, angetrieben. Je nach Stellung des Sollwertgebers 14 soll der Scheinwerfer 10 mehr oder weniger auf- oder abgeblendet, also dessen Neigungswinkel verstellt werden. Dazu wird der Istwertgeber 28 als Winkelaufnehmer benutzt. Dieser liefert das Istsignal V_{FB} und ist mechanisch mit dem Antriebsmotor 12 und z. B. über einen Schneckenantrieb mit der Nickmechanik des Scheinwerfers 10 verbunden. Das vom Sollwertgeber 14 gelieferte Signal V₁₄ wird in der Vergleichsstufe 20 mit dem Signal V_{FB} verglichen. Je nach Differenzspannung V dreht der Antriebsmotor 12 so lange und verändert das Signal V_{FB} bis das Differenzsignal ΔV zu null wird.

Da das gesamte System eine gewisse Massenträgheit aufweist, wird der Abgleich zwischen Sollwertgeber 14 und Istwertgeber 28 durch ein "Ausrollen" und damit einer Weiterbelegung des Antriebsmotors 12 verfälscht. Dies kann zu unerwünschten Kippschwingungen des gesamten Systems führen. Ferner führt die Anordnung bei kleinsten Störspannungen unerwünschte Stellbewegungen aus.

Weil der Sollwertgeber 14 und der Istwertgeber 28 an zwei verhältnismäßig weit voneinander entfernten Orten installiert ist, ist des Weiteren die Einstreuung von Störungen über die Zuleitungen B hochwahrscheinlich. Da die Betriebsspannung V_{B} direkt an dem Sollwertgeber 14 angelegt ist und die übrige Schaltung über die Zuleitungsimpedanz versorgt wird, bricht bei jedem Start des Antriebsmotors 12 die Speisespannung V_{S} ein. Es entsteht eine unerwünschte Eingangsspannungsdifferenz an der Vergleichsstufe 20, was gezwungenermaßen zu Kippschwingungen am Scheinwerfer 10 aufgrund des unerwünschten Hin- und Herantriebes des Motors 12 bewirkt. Eine solche Kippschwingung hat darüber hinaus eine deutlich erhöhte Leistungsaufnahme zur Folge und kann evtl. sogar zu einer Überhitzung der Treiberstufe 24 führen.

Dieses Problem wurde im Wesentlichen dadurch gelöst, daß die Vergleichsstufe 20 mit einer Hysterese versehen ist. Zusätzlich muß jedoch die Speisespannung V_{S} mit einem relativ großen Elektrolytkondensator (vgl. in Fig. 5, Bezugszeichen 26) gegen Masse gesiebt werden. Dieser Elektrolytkondensator 26 ist teuer und zeichnet sich nur durch einen eingeschränkten Temperaturbereich aus. Darüber hinaus ist ein solcher Elektrolytkondensator mit einer entsprechend großen Kapazität nicht als SMD-Bauelement verfügbar und läuft daher einer zunehmenden Miniaturisierung der Schaltung zuwider. Schließlich können solche Elektrolytkondensatoren bei hartem Einsatz, wie er im Kfz regelmäßig gegeben ist, auch austrocknen, so daß deren Zuverlässigkeit unsicher ist. Für eine akzeptable Leuchtweitenregulierung ist es dennoch erforderlich, einen solchen Elektrolytkondensator mit hoher Kapazität und damit großem Siebfaktor zu verwenden, um Kippschwingungen des Scheinwerfers 10 sicher zu unterdrücken.

Die Erfindung hat das Ziel, ein Verfahren und eine Schaltungsanordnung zur Leuchtweitenregulierung eines Scheinwerfers anzugeben, das die Verwendung eines Elektrolytkondensators mit hoher Kapazität entbehrlich macht und daher klein bauend zu realisieren ist.

Diese Aufgabe wird für das Verfahren durch die Merkmale des Anspruchs 1 und für die Schaltungsanordnung durch die Merkmale des Anspruchs 7 gelöst.

Weiterbildungen der Erfindung sind Gegenstand der Unteransprüche.

Die Erfindung sieht im Wesentlichen eine Zusatzeinrichtung vor, die bei jedem Start des Antriebsmotors das Ergebnis eines Ist-/Soll-Vergleiches des Regelkreises für eine vorgegebene Zeit blockiert und damit ausblendet. Das Ausgangssignal der Vergleichsstufe innerhalb der Steuereinrichtung bleibt für diese Zeit ohne Wirkung.

Das Verfahren und die Schaltungsanordnung werden nachfolgend im Zusammenhang mit einem Ausführungsbeispiel anhand der Zeichnung näher erläutert. Es zeigen:
- Fig. 1: das Blockschaltbild eines Ausführungsbeispieles einer Schaltungsanordnung zur Leuchtweitenregulierung eines Scheinwerfers gemäß vorliegender Erfindung,
- Fig. 2: die wesentlichen Spannungs- und Stromverläufe in der Schaltungsanordnung von Fig. 1,
- Fig. 3: ein Ausführungsbeispiel für eine in der Steuereinrichtung von Fig. 1 eingesetzte Ausblendeinrichtung,
- Fig. 4: Signalverläufe zu der Schaltungsanordnung von Fig. 3, und
- Fig. 5: die bereits erläuterte Schaltungsanordnung zur Leuchtweitenregulierung eines Scheinwerfers nach dem Stand der Technik.

In den nachfolgenden Figuren bezeichnen, sofern nicht anders angegeben, gleiche Bezugszeichen gleiche Teile mit gleicher Bedeutung. Die bereits im Zusammenhang mit der Erläuterung von Fig. 5 benutzten Bezugszeichen gelten für gleiche Teile mit gleicher Bedeutung weiter.

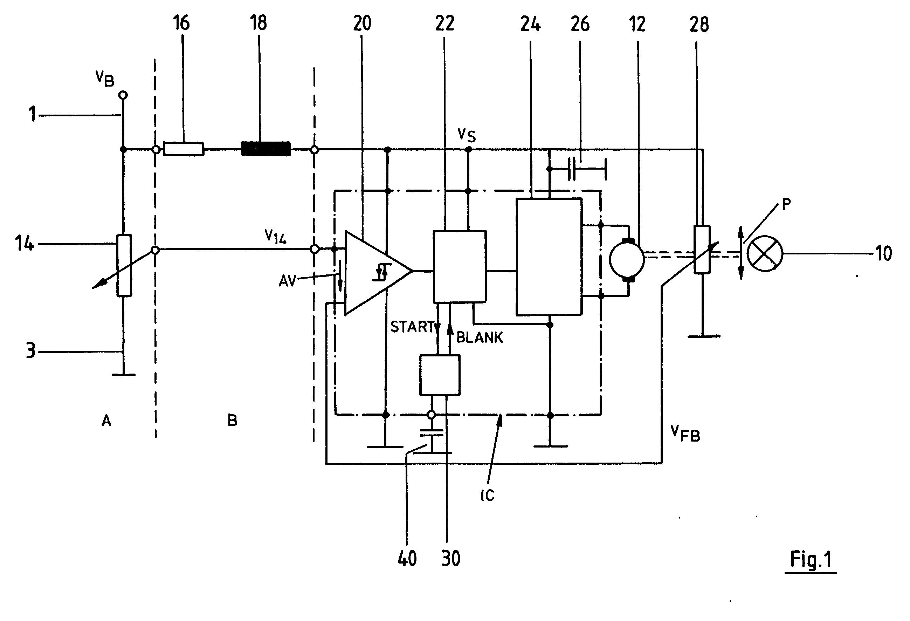

Die in Fig. 1 dargestellte Schaltungsanordnung entspricht bis auf die nachfolgend erläuterten Unterschiede der Schaltungsanordnung von Fig. 5. Der entscheidende Unterschied zur Schaltungsanordnung von Fig. 5 besteht in der Schaltungsanordnung von Fig. 1 darin, daß in der Steuereinrichtung IC, die vorzugsweise als integrierter Schaltkreis ausgeführt ist, eine Ausblendeinrichtung 30 sitzt, welche mit der Logikeinheit 22 in noch zu erläuternder Weise gekoppelt ist. Die Ausblendeinrichtung 30 empfängt von der Logikeinheit 22 ein Signal START, verarbeitet dieses Signal und leitet der Logikeinheit 22 ein Signal BLANK zu. Die Ausblendeinrichtung 30 ist über einen Kondensator 40, der außerhalb der Steuereinrichtung IC angeordnet ist, an Bezugspotential geschaltet.

Ein weiterer wesentlicher Unterschied ist, daß der Kondensator 26 jetzt nicht als Elektrolytkondensator, sondern als Kondensator mit verhältnismäßig geringer Kapazität ausgebildet ist. Der Kondensator 26 dient ebenfalls als Siebkondensator, kann jedoch auf einige 100 nF verringert sein. Damit ist der Einsatz einer preiswerten, kleinen temperaturfesten SMDfähigen (surface mounted device) und zuverlässigen keramischen Kapazität möglich.

Die Ausblendeinrichtung 30 sorgt dafür, daß das Ausgangssignal der Vergleichsstufe 20 für eine vorgegebene Zeitspanne ohne Wirkung bleibt und damit ausgeblendet ist.

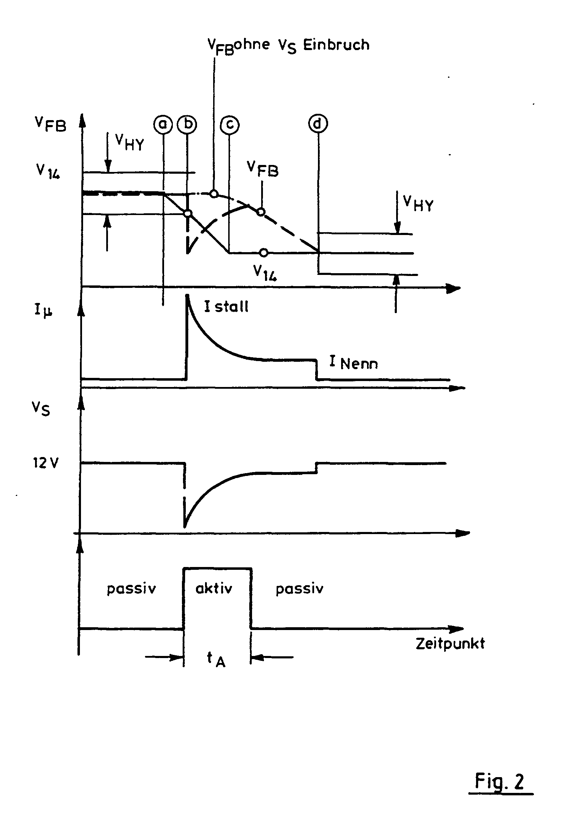

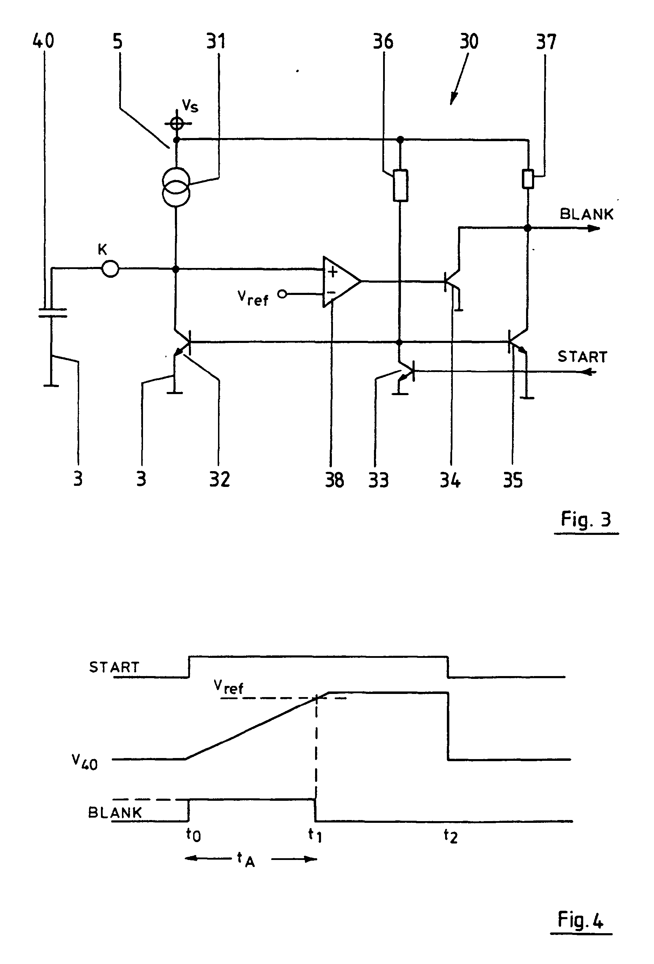

Zum besseren Verständnis dieser Funktion sind die wichtigsten Spannungs- und Stromverläufe in Fig. 2 dargestellt. Hierauf wird noch weiter unten eingegangen. Nach der vorgegebenen Zeitspanne der Ausblendung arbeitet die Schaltungsanordnung wieder, ohne daß die Ausblendeinrichtung 30 weiter Einfluß nimmt. Die Ausblendzeit kann mit einem keramischen Kondensator verhältnismäßig geringer Kapazität individuell an die jeweilige Applikation angepaßt werden (vgl. hierzu Fig. 3). Der Kondensator 26 ist noch erforderlich, um die Spannungsänderungsgeschwindigkeit (dV_{S}/dt) zu limitieren. Eine zu hohe Spannungsänderungsgeschwindigkeit ("Slew-rate") hat Rückwirkungen von der Treiberstufe 24 auf die Logikeinheit 22 und der Vergleichsstufe 20 zur Folge. Solche Rückwirkungen treten insbesondere dann auf, wenn die Steuereinrichtung IC monolithisch in einen Halbleiterkörper integriert ist.

In Fig. 2 sind untereinander vier Zeitdiagramme von Spannungs- und Stromverläufen in zeitlicher Beziehung zueinander untereinander dargestellt. In der obersten Kurve ist das Spannungssignal V₁₄ dargestellt, das ausgehend von einem höheren Wert zum Zeitpunkt a allmählich auf einen niedrigeren Wert durch entsprechende Betätigung des Sollwertgebers 14 (vgl. hierzu Fig. 1) reduziert wird. Zum Zeitpunkt c ist dieser niedrigere Wert erreicht. Mit V_{HY} ist die Hysteresespannung der Vergleichsstufe 20 bezeichnet. Zum Zeitpunkt b, der zwischen den Zeitpunkten a und c liegt, erreicht das Signal V₁₄ den unteren Hysteresewert der Vergleichsstufe 20. Zum Zeitpunkt b startet der Antriebsmotor 12. Der Motorstrom IM springt zum Zeitpunkt b auf den hohen Blockierstrom I_{STALL}, um anschließend mit der mechanischen Zeitkonstanten auf den Nennstrom I_{NENN} abzusinken.

Die Speisespannung V_{S} sinkt zum Zeitpunkt b abrupt ab. Das Istwertsignal V_{FB} bricht entsprechend der strichlierten Linie im oberen Signaldiagramm zum Zeitpunkt b ein und sinkt deutlich unter das Sollsignal V₁₄. Ohne die erfindungsgemäße Ausblendeinrichtung 30 und damit bei einer Schaltungsanordnung nach dem Stand der Technik würde der Antriebsmotor 12 in diesem Fall gestoppt und rückwärts gesteuert, da V_{FB} < (V₁₄ -1/2 V_{HY}) ist.

Erfindungsgemäß sorgt jedoch die Ausblendeinrichtung 30 dafür, daß unmittelbar nach dem Start des Antriebsmotors 12, also zum Zeitpunkt b, das Ausgangssignal der Vergleichsstufe 20 für eine vorgegebene Zeitspanne unterdrückt wird. Die vorgegebene Zeitspanne ist so gewählt, daß auf jeden Fall nach Ablauf der Zeitspanne V_{FB} > V₁₄ ist. Im dargestellten Ausführungsbeispiel von Fig. 2 ist die Ausblendzeit t_{A} so groß gewählt, daß deren Ende etwas nach dem Zeitpunkt c liegt. Wie im obersten Zeitdiagramm von Fig. 2 dargestellt, springt also das Signal V_{FB} zum Zeitpunkt b sprungartig unter V₁₄, um dann allmählich wieder anzusteigen. Nach der Ausblendzeit t_{A} sinkt das Signal V_{FB} bis zum Zeitpunkt d, zu dem der Antriebsmotor 12 abgeschaltet wird.

In Fig. 3 ist ein Ausführungsbeispiel der Ausblendeinrichtung 30 von Fig. 1 dargestellt. Die Schaltung weist den bereits erläuterten Kondensator 40 auf, der beispielsweise einen Kapazitätswert von 47 nF haben kann und mit einem Anschluß mit der Bezugspotentialklemme 3 und mit seinem anderen Anschluß an eine Klemme der Steuereinrichtung angeschlossen ist. Diese Klemme ist mit dem Bezugszeichen K bezeichnet und innerhalb der Ausblendeinrichtung 30 mit dem nicht invertierenden Eingang eines Vergleichers 38 in Verbindung. Der invertierende Eingang des Vergleichers 38 ist mit einer Referenzspannung V_{REF} in Kontakt. Die Klemme K ist darüber hinaus über eine Stromquelle 31 an die Speisespannungsklemme 5 für die Speisespannung V_{S} geschaltet. Die Klemme K ist zusätzlich über die Laststrecke eines Bipolartransistors 32 an die Bezugspotentialklemme 3 geschaltet. Die Ausgangsklemme des Vergleichers 38 ist mit dem Steueranschluß eines zweiten Transistors 34 in Verbindung. Die Laststrecke dieses zweiten Transistors 34 liegt zwischen der Bezugspotentialklemme 3 und einer Klemme, an der das Signal BLANK abgreifbar ist. Diese Klemme ist über einen Widerstand 37 mit der Speisespannungsklemme 5 in Verbindung. Zusätzlich ist diese Klemme über die Laststrecke eines dritten Transistors 35 an die Bezugspotentialklemme 3 geschaltet. Der Steueranschluß dieses dritten Transistors 35 ist mit dem Steueranschluß des ersten Transistors 32 in Verbindung und über die Laststrecke eines vierten Transistors 33 an Bezugspotentialklemme 3 geschaltet. Der Verbindungspunkt der beiden Steueranschlüsse der Transistoren 32, 35 ist des Weiteren über einen Widerstand 36 an die Speisespannungsklemme 5 gelegt. Der Steueranschluß des vierten Transistors ist mit einer Klemme für das Signal START in Verbindung. Die erwähnten Widerstände 36, 37 können auch durch Stromquellen ersetzt sein.

Die Funktionsweise dieser Ausblendeinrichtung 30 wird im Zusammenhang mit den Signalverläufen von Fig. 4 deutlich. Wird die Differenz V₁₄ - V_{FB} (vgl. hierzu Fig. 1) größer als die Schalthysterese der Vergleichsstufe 20, so wird das Signal START erzeugt, was über den Transistor 33 die Basen der Transistoren 32 und 35 klemmt. Hierdurch wird der Ladevorgang des Kondensators 40 gestartet, wodurch die an ihm abfallende Spannung V₄₀ ansteigt. Mit dem Beginn des Signales START beginnt auch das Signal BLANK zum Zeitpunkt t₀. Erreicht die Spannung V₄₀ die Referenzspannung V_{ref}, wird das Signal BLANK durch den Transistor 34 wieder auf niedrigen Pegel "Low" gesetzt. Die Zeitspanne t₁-t₀ ist die Ausblendzeit t_{A}. Während das Signal BLANK einen hohen Pegel "high" einnimmt, sorgt die Logikeinheit 22 der Steuereinrichtung IC dafür, daß das Ausgangssignal der Vergleichsstufe 20 ausgeblendet wird. Wird das Signal V₁₄ gleich dem Signal V_{FB}, was zum Zeitpunkt t₂ der Fall ist, wird das Signal START rückgesetzt und der Kondensator 40 über den Transistor 32 entladen.

Es ist hier noch abschließend anzumerken, daß die Schaltung nicht notwendigerweise nur zur Leuchtweitenregulierung von Scheinwerfern eingesetzt werden kann. Vielmehr findet das erfindungsgemäße Verfahren und die vorgestellte Schaltungsanordnung auch überall dort sinnvoll Anwendung, wo es darauf ankommt, daß ein Motor ohne unerwünschte Hin- und Herbewegung anlaufen muß. Solche Motoren werden allgemein als Servomotoren bezeichnet.

## Patentansprüche

1. Verfahren zur Leuchtweitenregulierung eines Scheinwerfers (10), bei welchem in Abhängigkeit von aus einem Ist-/Soll-Vergleich gewonnenen Stellsignal ein mit dem Scheinwerfer (10) mechanisch gekoppelter Antriebsmotor (12) zur Verstellung des Scheinwerfers (10) angetrieben wird,
**dadurch gekennzeichnet, daß** nach jedem Start des Antriebsmotors (12) das Ergebnis des Ist-/Soll-Vergleiches für eine vorgegebene Zeitspanne (t_{A}) ignoriert und damit ausgeblendet wird.

2. Verfahren nach Anspruch 1,
**dadurch gekennzeichnet, daß** das Stellsignal als Differenzsignal eines von einer manuell zu betätigenden Verstelleinrichtung (14) kommenden Soll-Signales (V₁₄) und einem die augenblickliche Stellung des Scheinwerfers (10) entsprechenden Ist-Signales (V_{FB}) abgeleitet wird.

3. Verfahren nach Anspruch 1 oder 2,
**dadurch gekennzeichnet, daß** das Stellsignal hysteresebehaftet ist.

4. Verfahren nach einem der Ansprüche 1 bis 3,
**dadurch gekennzeichnet, daß** die vorgegebene Zeitspanne (t_{A}) einstellbar ist.

5. Verfahren nach einem der Ansprüche 1 bis 4,
**dadurch gekennzeichnet, daß** der Beginn (t₀) der Zeitspanne (t_{A}) durch eine vorgegebene Größe des Differenzsignales bestimmt ist und das Ende (t₁) der Zeitspanne (t_{A}) dann erreicht ist, wenn ein Kondensator (40) auf eine vorgegebene Referenzspannung (V_{ref}) aufgeladen worden ist.

6. Verfahren nach Anspruch 5,
**dadurch gekennzeichnet, daß** ein Rücksetzsignal für einen neuen Beginn (t₀) der Zeitspanne (t_{A}) erzeugt wird, wenn das Differenzsignal mindestens annähernd gleich oder gleich 0 ist.

7. Schaltungsanordnung zur Leuchtweitenregulierung eines Scheinwerfers (10) mit folgenden Merkmalen:
- einen Antriebsmotor (12) zur Verstellung des Scheinwerfers (10);
- einen mit dem Scheinwerfer (10) gekoppelten Istwertgeber (28) zur Bildung eines für die augenblickliche Stellung des Scheinwerfers (10) maßgebenden Ist-Signales (V_{FB});
- einen Sollwertgeber (14) zur Bildung eines für eine Sollstellung des Scheinwerfers (10) maßgebenden Soll-Signales (V₁₄);
- eine Steuereinrichtung (IC), durch welche nach Maßgabe eines aus dem Soll-Signal (V₁₄) und dem Ist-Signal (V_{FB}) gebildeten Differenzsignales der Antriebsmotors (12) antreibbar ist,
**gekennzeichnet durch** das weitere Merkmal:
- eine in der Steuereinrichtung (IC) vorgesehene Ausblendeinrichtung (30), **durch** welche nach jedem Start des Antriebsmotors (12) das Differenzsignal für eine vorgegebene Zeitspanne (t_{A}) ausblendbar ist.

8. Schaltungsanordnung nach Anspruch 7,
**dadurch gekennzeichnet, daß** die Steuereinrichtung (IC) eingangsseitig eine Vergleichsstufe (20) und ausgangsseitig eine Treiberstufe (24) sowie eine zwischen die Vergleichsstufe (20) und die Treiberstufe (24) geschaltete Logikeinheit (22) aufweist.

9. Schaltungsanordnung nach Anspruch 8,
**dadurch gekennzeichnet, daß** der Istwertgeber (14) und/oder der Sollwertgeber (28) durch Potentiometer gebildet ist, wobei der Mittelabgriff oder die Mittelabgriffe des oder der Potentiometer mit der Vergleichsstufe (20) der Steuereinrichtung (IC) gekoppelt ist.

10. Schaltungsanordnung nach einem der Ansprüche 7 bis 9,
**dadurch gekennzeichnet, daß** die Ausblendeinrichtung (30) einen für die Zeitspanne (t_{A}) maßgebenden Kondensator (40) und einen Vergleicher (38) aufweist, und daß der Vergleicher (38) eingangsseitig einerseits mit einer Referenzspannung (V_{ref}) beaufschlagbar und andererseits an den Kondensator (40) angeschlossen ist.

11. Schaltungsanordnung nach einem der Ansprüche 7 bis 10,
**dadurch gekennzeichnet, daß** die Ausblendeinrichtung (30) die Serienschaltung einer zwischen eine Versorgungsspannungsklemme (1) und Bezugspotentialklemme (3) geschalteten Reihenschaltung einer Stromquelle (31) und der Laststrecke eines Transistors (32) aufweist, daß der Kondensator (40) zwischen die Bezugspotentialklemme (3) und den Mittenabgriff der Reihenschaltung der Stromquelle (31) und des Transistors (32) geschaltet, daß der Mittenabgriff mit einer ersten Eingangsquelle des Vergleichers (38) verbunden ist, daß eine andere Eingangsklemme des Vergleichers (38) an die Referenzspannung (V_{ref}) ankoppelbar ist, daß der Ausgang des Vergleichers (38) mit dem Steueranschluß eines zweiten Transistors (34) verbunden ist, daß die Laststrecke dieses zweiten Transistors (34) zwischen der Bezugspotentialklemme (3) und einer Ausgangsklemme für ein Ausgangssignal (BLANK) der Ausblendeinrichtung (30) verbunden ist, daß diese Ausgangsklemme über einen Widerstand (37) mit der Versorgungsspannungsklemme (1) und über die Laststrecke eines dritten Transistors (35) mit der Bezugspotentialklemme (3) in Verbindung steht, daß der Steueranschluß dieses dritten Transistors (35) mit dem Steueranschluß des ersten Transistors (32) verbunden ist und über die Laststrecke eines vierten Transistors (33) an die Bezugspotentialklemme (3) und über einen weiteren Widerstand (36) an die Versorgungsspannungsklemme (1) geschaltet ist, und daß der Steueranschluß des vierten Transistors (33) mit einer Eingangsklemme für ein Eingangssignal (START) der Ausblendeinrichtung (30) in Verbindung steht.

12. Schaltungsanordnung nach Anspruch 11,
**dadurch gekennzeichnet, daß** mindestens einer der Widerstände (36, 37) durch Stromquellen realisiert ist.

13. Schaltungsanordnung nach einem der Ansprüche 7 bis 12,
**dadurch gekennzeichnet, daß** die Steuereinrichtung (IC) als integrierter Schaltkreis ausgebildet ist.

14. Schaltungsanordnung nach einem der Ansprüche 7 bis 13,
**dadurch gekennzeichnet, daß** die Vergleichsstufe (20) eine Schalthysterese aufweist.

15. Schaltungsanordnung nach einem der Ansprüche 7 bis 14,
**dadurch gekennzeichnet, daß** der Scheinwerfer (10) ein Kfz-Scheinwerfer ist.

## Claims

1. Method for controlling the lighting range of a headlamp (10), in which a drive motor (12) which is mechanically coupled to the headlamp (10) and is intended to adjust the headlamp (10) is driven on the basis of an actuating signal obtained from an actual/desired comparison,
**characterized in that** the result of the actual/desired comparison is ignored and thus masked for a predefined period of time (t_{A}) each time the drive motor (12) is started.

2. Method according to Claim 1,
**characterized in that** the actuating signal is derived as a differential signal of a desired signal (V₁₄) coming from an adjustment device (14), which can be manually operated, and an actual signal (V_{FB}) corresponding to the current position of the headlamp (10).

3. Method according to Claim 1 or 2,
**characterized in that** the actuating signal is subject to hysteresis.

4. Method according to one of Claims 1 to 3,
**characterized in that** the predefined period of time (t_{A}) can be set.

5. Method according to one of Claims 1 to 4,
**characterized in that** the beginning (t₀) of the period of time (t_{A}) is determined by a predefined magnitude of the differential signal, and the end (t₁) of the period of time (t_{A}) is reached when a capacitor (40) has been charged to a predefined reference voltage (V_{ref}).

6. Method according to Claim 5,
**characterized in that** a reset signal for a new beginning (t₀) of the period of time (t_{A}) is generated when the differential signal is at least approximately equal to 0 or is equal to 0.

7. Circuit arrangement for controlling the lighting range of a headlamp (10), said circuit arrangement having the following features:
- a drive motor (12) for adjusting the headlamp (10);
- an actual value transmitter (28) which is coupled to the headlamp (10) and is intended to form an actual signal (V_{FB}) which is decisive for the current position of the headlamp (10);
- a desired value transmitter (14) for forming a desired signal (V₁₄) which is decisive for a desired position of the headlamp (10);
- a control device (IC) which can be used to drive the drive motor (12) in accordance with a differential signal formed from the desired signal (V₁₄) and the actual signal (V_{FB}),
**characterized by** the following further feature:
- a masking device (30) which is provided in the control device (IC) and can be used to mask the differential signal for a predefined period of time (t_{A}) each time the drive motor (12) is started.

8. Circuit arrangement according to Claim 7,
**characterized in that** the control device (IC) has a comparison stage (20) on the input side and a driver stage (24) on the output side as well as a logic unit (22) which is connected between the comparison stage (20) and the driver stage (24).

9. Circuit arrangement according to Claim 8,
**characterized in that** the actual value transmitter (14) and/or the desired value transmitter (28) is/are formed by potentiometers, the centre tap or the centre taps of the potentiometer(s) being coupled to the comparison stage (20) of the control device (IC).

10. Circuit arrangement according to one of Claims 7 to 9,
**characterized in that** the masking device (30) has a capacitor (40), which is decisive to the period of time (t_{A}), and a comparator (38), and **in that** a reference voltage (V_{ref}) can be applied to the input of the comparator (38), on the one hand, and the input of the comparator is connected to the capacitor (40), on the other hand.

11. Circuit arrangement according to one of Claims 7 to 10,
**characterized in that** the masking device (30) has the series connection of a series circuit comprising a current source (31) and the load path of a transistor (32), said series circuit being connected between a supply voltage terminal (1) and a reference-earth potential terminal (3), **in that** the capacitor (40) is connected between the reference-earth potential terminal (3) and the centre tap of the series circuit comprising the current source (31) and the transistor (32), **in that** the centre tap is connected to a first input source of the comparator (38), **in that** another input terminal of the comparator (38) can be coupled to the reference voltage (V_{ref}), **in that** the output of the comparator (38) is connected to the control connection of a second transistor (34), **in that** the load path of this second transistor (34) is connected between the reference-earth potential terminal (3) and an output terminal for an output signal (BLANK) from the masking device (30), **in that** this output terminal is connected to the supply voltage terminal (1) via a resistor (37) and is connected to the reference-earth potential terminal (3) via the load path of a third transistor (35), **in that** the control connection of this third transistor (35) is connected to the control connection of the first transistor (32) and is connected to the reference-earth potential terminal (3) via the load path of a fourth transistor (33) and is connected to the supply voltage terminal (1) via a further resistor (36), and **in that** the control connection of the fourth transistor (33) is connected to an input terminal for an input signal (START) of the masking device (30).

12. Circuit arrangement according to Claim 11,
**characterized in that** at least one of the resistors (36, 37) is implemented using current sources.

13. Circuit arrangement according to one of Claims 7 to 12,
**characterized in that** the control device (IC) is in the form of an integrated circuit.

14. Circuit arrangement according to one of Claims 7 to 13,
**characterized in that** the comparison stage (20) has switching hysteresis.

15. Circuit arrangement according to one of Claims 7 to 14,
**characterized in that** the headlamp (10) is a motor vehicle headlamp.

## Revendications

1. Procédé pour régler la distance d'éclairage d'un projecteur (10), selon lequel un moteur d'entraînement (12) couplé mécaniquement au projecteur (10) est entraîné pour régler le projecteur (10), en fonction d'un signal de réglage obtenu par une comparaison valeur réelle/valeur de consigne
**caractérisé en ce qu'**
après chaque démarrage du moteur d'entraînement (12) le résultat de la comparaison valeur réelle/valeur de consigne est ignoré et donc masqué pendant une durée prédéterminée (t_{A}).

2. Procédé selon la revendication 1,
**caractérisé en ce que**
le signal de réglage est déduit en tant que signal différentiel entre un signal de consigne (V₁₄) venant d'un dispositif de réglage (14) à actionner manuellement et un signal réel (V_{FB}) correspondant à la position actuelle du projecteur (10).

3. Procédé selon la revendication 1 ou 2,
**caractérisé en ce que**
le signal de réglage est soumis à une hystérésis.

4. Procédé selon l'une des revendications 1 à 3,
**caractérisé en ce que**
la durée prédéterminée (t_{A}) est réglable.

5. Procédé selon l'une des revendications 1 à 4,
**caractérisé en ce que**
le début (t₀) de la durée (t_{A}) est déterminé par une grandeur prédéterminée du signal différentiel, et la fin (t₁) de la durée (t_{A}) est atteinte lorsqu'un condensateur (40) a été chargé à une tension de référence (V_{ref}) prédéterminée.

6. Procédé selon la revendication 5,
**caractérisé en ce qu'**
un signal de remise à l'état initial pour un nouveau début (0) de la durée (t_{A}) est produit lorsque le signal différentiel est au moins approximativement égal à égale à 0.

7. Dispositif pour régler la distance d'éclairage d'un projecteur ayant les caractéristiques suivantes :
- un moteur d'entraînement (12) pour régler le projecteur (10) ;
- un générateur de valeur réelle (28) couplé au projecteur (10) pour former un signal de valeur réelle (V_{FB}) déterminant pour la position actuelle du projecteur (10) ;
- un consignateur (14) pour former un signal de valeur de consigne (V₁₄) déterminant pour une position de consigne du projecteur (10) ;
- un dispositif de commande (IC) entraînant le moteur d'entraînement (12) en fonction d'un signal différentiel formé à partir du signal de valeur de consigne (V₁₄) et du signal de valeur réelle (V_{FB}),
**caractérisé par**
une autre caractéristique :
- un dispositif de masquage (30) prévu dans le dispositif de commande (IC), masque, après chaque démarrage du moteur d'entraînement (12), le signal différentiel pour une durée prédéterminée (t_{A}).

8. Dispositif selon la revendication 7,
**caractérisé en ce que**
le dispositif de commande (IC) comporte côté entrée un étage de comparaison (20) et côté sortie un étage d'attaque (24), ainsi qu'une unité logique (22) située entre l'étage de comparaison (20) et l'étage d'attaque (24).

9. Dispositif selon la revendication 8,
**caractérisé en ce que**
le générateur de valeur réelle (28) et/ou le consignateur (14) sont formés par des potentiomètres, la prise médiane ou les prises médianes du ou des potentiomètres étant couplées avec l'étage de comparaison (20) du dispositif de commande (IC).

10. Dispositif selon l'une des revendications 7 à 9,
**caractérisé en ce que**
le dispositif de masquage (30) comporte un condensateur (40) déterminant pour la durée (t_{A}) et un comparateur (38), et le comparateur (38) peut recevoir côté entrée une tension de référence (V_{ef}) d'une part et est connecté au condensateur (40) d'autre part.

11. Dispositif selon l'une des revendications 7 à 10,
**caractérisé en ce que**
le dispositif de masquage (30) présente le montage en série d'un montage en série d'une source de courant (31), monté entre une borne de tension d'alimentation (1) et une borne à potentiel de référence (3), et le trajet sous charge d'une transistor (32), le condensateur (40) est monté entre la borne à potentiel de référence (3) et la prise médiane du montage en série de la source de courant (31) et du transistor (32), la prise médiane est reliée à une première source d'entrée du comparateur (38), une autre borne d'entrée du comparateur (38) peut être couplée à la tension de référence (V_{ref}), la sortie du comparateur (38) est reliée au raccordement de commande d'un deuxième transistor (34), le trajet sous charge de ce deuxième transistor (34) est relié entre la borne à potentiel de référence (3) et une borne de sortie d'un signal de sortie (BLANK) du dispositif de masquage (30), cette borne de sortie est reliée par l'intermédiaire d'une résistance (37) à la borne de tension d'alimentation (1) et par l'intermédiaire du trajet sous charge d'un troisième transistor (35) à la borne à potentiel de référence (3), le raccordement de commande de ce troisième transistor (35) est relié au raccordement de commande du premier transistor (32) et connecté par l'intermédiaire du trajet sous charge d'un quatrième transistor (33) à la borne à potentiel de référence (3) et par l'intermédiaire d'une autre résistance (36) à la borne de tension d'alimentation (1), et le raccordement de commande du quatrième transistor (33) est relié à une borne d'entrée d'un signal d'entrée (START) du dispositif de masquage (30).

12. Dispositif selon la revendication 11,
**caractérisé en ce qu'**
au moins une des résistances (36, 37) est réalisée par des sources de courant.

13. Dispositif selon l'une des revendications 7 à 12,
**caractérisé en ce que**
la dispositif de commande IC est un circuit intégré.

14. Dispositif selon l'une des revendications 7 à 13,
**caractérisé en ce que**
l'étage de comparaison (20) présente une hystérésis de commutation.

15. Dispositif selon l'une des revendications 7 à 14,
**caractérisé en ce que**
le projecteur (10) est un phare d'automobile.
